# EUROPEAN PATENT APPLICATION

(11) **EP 3 626 651 A2**
(43) Date of publication of application: **25.03.2020**
(21) Application number: 19198769.2
(22) Date of filing: 20.09.2019
(51) Int. Cl.: B65D 85/04

(54) **CONTAINER WITH INTEGRATED INDICATOR AND METHOD OF INDICATING AMOUNT OF CONTENT**

(30) Priority: 20.09.2018 US 201816136421
(71) Applicant: Lincoln Global, Inc., Santa Fe Springs, CA 90670 (US)
(72) Inventor: DELEVAQUE, Jean-Marc, 95895 Cergy Pontoise (FR)
(74) Representative: Grosse Schumacher Knauer von Hirschhausen

(57) **Abstract**

A warning on an amount of welding wire (118) remaining in a package (100) can be implemented with an indicator system integrated within the package (100). The indicator system provides a visual indication on the amount of wire (118) remaining. The visual indication is updated as the wire (118) is dispensed during a welding operation. The indicator system includes one or more sensing elements (120, 122) that engage the welding wire (118) at various locations. When the wire (118) is dispensed, the sensing elements (120, 122) eventually lose engagement and output a corresponding signal. The visual indication is updated based on the signals from the sensing elements (120, 122).

## Description

### Technical Field

In general, the present invention relates to indicators for remaining amounts of weld consumables and, in particular, to a package with an integrated sensing and display system and a interconnected equipment system to detect a consumable amount and inform a welder according to the preamble of claim 1.

### Background of the Invention

Some welding processes utilize a consumable electrode such as a welding wire. While an operator performs a weld, the welding wire is fed to a welding gun or torch where it is melted through application of a welding current and deposited to a weld joint. Consumables, like welding wire, may be distributed and utilized in a variety of formats. For instance, wire can be wound on a plastic or metal spool that can be installed in a wire feeder to support semi-automatic of robotic arc welding. Welding wire may also be distributed in relatively larger formats, such as a 500-1000 pound packages, that can also be coupled to a welding system to enable feeding directly from the packages.

An operator of a semi-automatic or robotic arc welding system does not have a warning related to the unwinding of the wire. If available wire runs out, a sudden stop of the welding process may occur. In such situations, the machine shuts down and grinding operations may be performed to effect recovery. Further, a contact tube at the end of the torch may be flashed and, thus, may need replacing.

### Summary of the Invention

The following summary presents a simplified summary in order to provide a basic understanding of some aspects of the (devices, systems and/or methods) discussed herein. This summary is not an extensive overview of the (devices, systems and/or methods) discussed herein. It is not intended to identify critical elements or to delineate the scope of such (devices, systems and/or methods). Its sole purpose is to present some concepts in a simplified form as a prelude to the more detailed description that is presented later.

In accordance with one aspect, a system is provided that includes at least two sensing elements mountable within a container for a coil of welding wire so as to engage the coil of welding wire at different locations. The system further includes an indicator configured to provide a visual indication of an amount of welding wire remaining. In addition, the system includes a circuit operatively coupled to the at least two sensing elements and the indicator. The circuit is configured to update the visual indication provided by the indicator in response to inputs indicative of respective statuses of the at least two sensing elements.

In accordance with another aspect, a method is provided. The method can include receiving a first status signal from a first sensing element mounted within the container, the first sensing element being configured to engage a coil of welding wire at a first location. The method can further include receiving a second status signal from a second sensing element mounted within the container, the second sensing element being configured to engage the coil of welding wire at a second location. In addition, the method can include outputting an indicator signal based on the first and second status signals. The method can further include displaying a visual indication on an indicator visible on an exterior of container in accordance with the indicator signal.

According to yet another aspect, a package for a coil of welding wire is provided. The package includes a carton that houses the coil of welding wire. The package further includes a sensing element positioned within an interior of the carton and configured to output a sensing signal indicative of a state of engagement between the sensing element and a portion of the welding wire. In addition, the package includes a circuit configured to receive the sensing signal from the sensing element and output an indicator signal based on the sensing signal. The package further includes an indicator located on an exterior of the carton and configured to receive the indicator signal from the circuit and to display a visual indication, based on the indicator signal, representative of an amount of welding wire remaining in the package.

These and other aspects and embodiments of this invention will be evident when viewed in light of the drawings, detailed description and appended claims.

### Brief Description of the Drawings

The invention may take physical form in certain parts and arrangements of parts, a preferred embodiment of which will be described in detail in the specification and illustrated in the accompanying drawings which form a part hereof, and wherein:
Fig. 1 is a schematic block diagram of an exemplary, non-limiting embodiment of package with integrated indicator according to one or more aspects;
Fig. 2 is an external, perspective view partial of an exemplary, non-limiting embodiment of a container in accordance with one or more aspects;
Fig. 3 is a partial, cross-sectional view of the container shown in Fig. 2;
Fig. 4 illustrates an exemplary, non-limiting embodiment of a logic circuit in accordance with one or more aspects;
Fig. 5 is a flow diagram of an exemplary, non-limiting embodiment for providing an warning on an amount of wire remaining in a container in accordance with one or more aspects;
Fig. 6 is a schematic block diagram of an exemplary, non-limiting embodiment of an integrated alert system in accordance with various aspects;
Fig. 7 is a schematic block diagram of an exemplary, non-limiting wire feeder in the system shown in Fig. 6;
Fig. 8 is a schematic block diagram of an exemplary, non-limiting welding mask in the system shown in Fig. 6; and
Fig. 9 is a schematic block diagram of an exemplary, non-limiting welding torch in the system shown in Fig. 6.

### Detailed Description of the Invention

Embodiments of the invention relate systems and methods for providing a warning on an amount of welding wire remaining in a package. In particular, an indicator system is integrated in the package that detects and outputs a visual indication on the amount of wire remaining. The visual indication is updated as the wire is dispensed during a welding operation. The indicator system includes one or more sensing elements that engage the welding wire at various locations. When the wire is dispensed, the sensing elements eventually lose engagement and output a corresponding signal. The visual indication can be updated based on the signals from the sensing elements.

According to another aspect, an interconnected system of welding apparatus provides an alert to an operator utilizing a welding system. A wire feeder includes a reader configured to detect a tag on the welding wire. The tag may be placed on the welding wire at a position near an end of a spool. The wire feeder may further include a transmitter such that, when the reader detects the tag, the transmitter sends a signal to other components as a warning that the welding wire spool is nearly exhausted. The system can include a welding mask and a welding torch that are configured to receive the signal from the wire feeder. The welding mask can activate an indicator visible to the operator as a warning. In addition, the welding torch can also activate an indicator to provide an additional warning to the operator.

Various embodiments will now be described with reference to the drawings, wherein like reference numerals are used to refer to like elements throughout. It is to be appreciated that the various drawings are not necessarily drawn to scale from one figure to another nor inside a given figure, and in particular that the size of the components are arbitrarily drawn for facilitating the understanding of the drawings. In the following description, for purposes of explanation, numerous specific details are set forth in order to provide a thorough understanding of the embodiments. It may be evident, however, that features described herein can be practiced without these specific details. Additionally, other embodiments are possible and the features described herein are capable of being practiced and carried out in ways other than as described. The terminology and phraseology used herein is employed for the purpose of promoting an understanding of the invention and should not be taken as limiting.

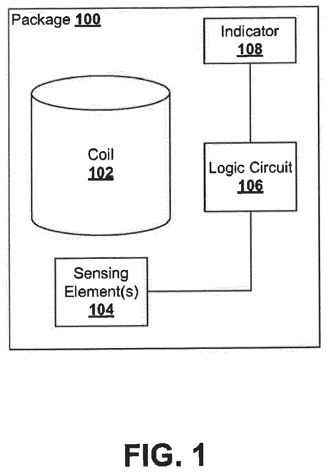

Turning initially to Fig. 1, an exemplary, non-limiting container or package 100 is illustrated. Container or package 100 may be utilized to hold a welding consumable for distribution and use. For instance, package 100 may store a coil of welding wire 102 (also referred to as simply coil 102) utilized in a welding process. Package 100 can include additional components and structures (not shown) to facilitate dispensing wire from coil 102 to a wire feed device, a welding torch, or other welding apparatus. Accordingly, package 100 may be deployed to a welding system in the form distributed without removal of the coil 102 from the package 100.

In some environments (e.g., a shipyard), a welding operator may be physically remote from a welding power supply, wire feeder, and/or source of welding wire. In other situations, such as robotic arc welding, the welding operation may be fully automated and included as a step in an larger production line. In either case, unanticipated exhaustion of welding wire can interrupt the welding operation and introduce significant time costs and production losses due to delays associated with recovery and resetting of the welding system.

An indicator system integrated with package 100 enables an amount of welding wire remaining in the package 100 to be readily discerned. For example, for a robotic welding system, personnel can inspect a visual indication on package 100 to identify a need to replace to the welding wire feeding a welding robot before exhaustion. As shown in Fig. 1, a sensing element 104 is provided within the package 100 and engages with coil 102 at a predetermined location. In one aspect, the sensing element 104 outputs a sensing signal indicative of whether or not the sensing element 104 is engaged with coil 102. That is, the sensing signal reports whether or not the coil 102 (or a portion thereof) contacts, is in proximity to, or is otherwise detectable by the sensing element 104. The sensing signal is received by a logic circuit 106, which in turn outputs an indicator signal based on the sensing signal. An indicator 108 receives the indicator signal from the logic circuit 106 and displays a visual indication pertaining to an amount of welding wire remaining in the package 100.

Generally, the indicator system provides a warning when the amount of wire in package 100 reduces to a pre-determined level corresponding to a location on coil 102 at which the sensing element 104 engages. For instance, the sensing signal from the sensing element 104 changes when the wire dispenses past an engagement point. The logic circuit 106 in turn updates the indicator signal so that the visual indication output by the indicator 108 notifies personnel that the welding wire in package 100 reached the pre-determined level.

According to an embodiment, the indicator system can include a set of sensing elements 104 that respectively provide individual sensing signals to logic circuit 106. Each sensing element 104 can engage coil 102 at different locations. Accordingly, the indicator system can provide finder indication of the amount of welding wire remaining. For example, the logic circuit 106 can receive a plurality of sensing signals from the sensing elements 104. Each sensing signal indicates whether the corresponding sensing element 104 contacts the coil 102. The logic circuit 106, in turn, outputs an indicator signal based on the plurality of sensing signals. The indicator signal is indicative of a threshold amount of welding wire remaining that corresponds, generally, to a particular set of contacted and released sensing elements. That is, by determining which sensing elements 104 detect the coil 102 and which elements 104 do not detect the coil 102, the logic circuit 106 outputs an indicator signal corresponding to the amount of welding wire remaining in the package 100. For example, a set of sensing elements 104 can be positioned to provide indications that the welding wire is depleted to 75%, 50%, 25%, 10%, etc. These threshold are merely illustrative as a variety of amounts remaining can be visually indicated depending on both a number and location of sensing elements.

As utilized herein, the terms "contact" and "engage" refer to a general state of detection of the coil 102 by sensing element 104 and is not limited to physical contact. For example, inductive sensors interact electromagnetically and can detect presence of a target without physical contact. Further, the terms "released" or "unengaged" refer to a state of the sensing element in which the sensing element does not detect the target.

In one embodiment, the sensing element 104 is a non-contact, inductive-type sensor that interacts with the coil 102 via magnetic fields. A damping effect of the magnetic field indicates proximity to the welding wire of coil 102. When the wire is dispensed so as to no longer impinge the magnetic field, the damping effect is removed. Thus, the sensing element 104 can output a corresponding signal based on whether or not the welding wire is in proximity. However, it is to be appreciated that sensing element 104 can be physical contacts with the welding wire of coil 102 such that the contact breaks when the wire pulls away while being dispensed.

According to another aspect, the indicator 108 can include one or more LEDs to provide the visual indication. As such, the visual indication can include illuminated and unilluminated LEDs to provide a level meter (like a fuel meter), a color coded output with the use of different colored LEDs, or a series of overlays to provide icons illuminated by the LEDs. It is to be appreciated that indicator 108 can be a display, such as an LCD or screen, that provides the visual indication.

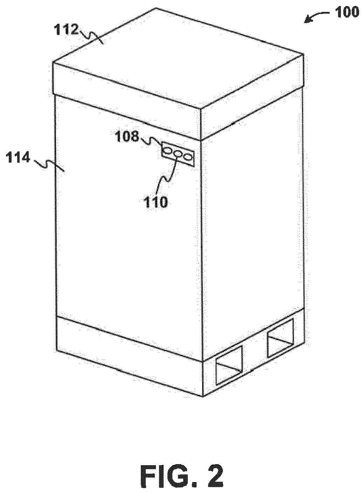

Turning to Fig. 2, a perspective view of an exemplary, non-limiting package 100 is illustrated. As shown in Fig. 2, the package 100 may be a container for a relatively large amount of welding wire (e.g. 500 to 1000 pounds) wound on a drum. The package 102 can include a carton 114 which houses and supports the drum (e.g. coil of welding wire 102) and a lid 112 to enable the drum to be deposited. Though not shown, the lid 112 can include an aperture or nozzle through which the welding wire is fed to a welding torch. Indicator 108 is positioned on an exterior of package 100. The indicator 108 can be placed on the carton 114 or the lid 112.

In accordance with an embodiment, the indicator 108 can include a set of LEDs 110. As shown in Fig. 2, the indicator 108 includes three LEDs 110, which may be different colors in order to provide a color coded output. For example, a green LED, an orange or yellow LED, and a red LED can be provided to indicate various warning levels regarding the amount of wire remaining. Alternatively, the LEDs 110 can collectively output a meter showing the amount of wire remaining. For instance, a full package can show all three LEDs illuminated. A package one-third empty, half empty, or emptied to some other threshold can show two LEDs illuminated. When the package depletes further (e.g. two-thirds empty, three-quarters empty, etc.), only one LEDs may be illuminated.

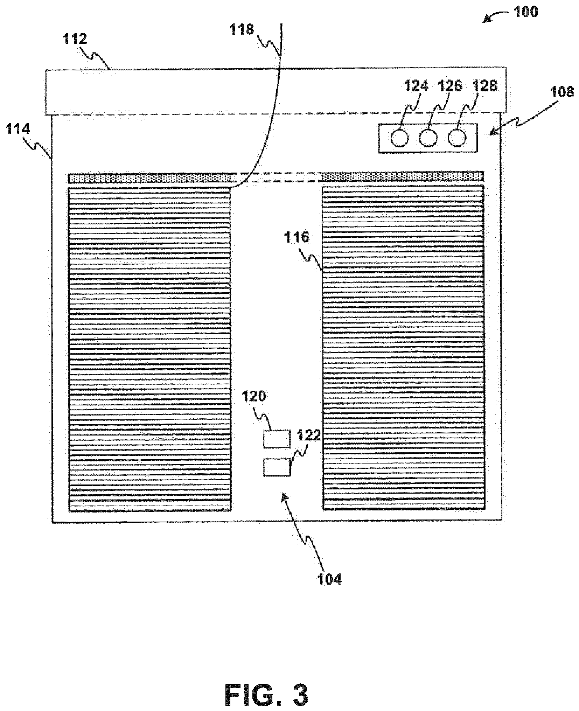

Turning now to Fig. 3, a partial, cross-sectional view of package 100 is depicted. A coil 116 of welding wire 118 is shown within the carton 114. As the wire is 118 is dispensed as shown, the coil 116 unwinds. The sensing elements 104 may be a set of elements including a first sensing element 120 and a second sensing element 122. According to an aspect, the sensing elements 120, 122 are arranged vertically within the package 100 so as to engage the coil 116 at different locations or heights. Accordingly, the sensing elements 120, 122 provide respective sensing signals indicative of whether the coil 116 has been depleted past specific, pre-determined thresholds corresponding to the respective position of the sensing elements. These thresholds can be discerned by a visual indication provided by the indicator 108 that includes a first LED 124, a second LED 126, and a third LED 128. According to one embodiment, the first LED 124 may be a green LED, the second LED 126 may be a yellow or orange LED, and the third LED 128 may be a red LED.

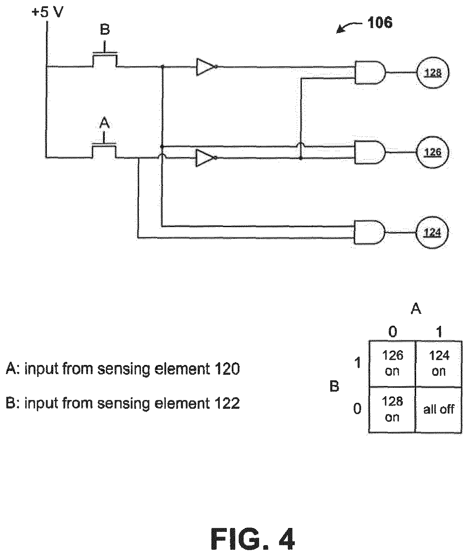

Fig. 4 illustrates an exemplary, non-limiting logic circuit 106 that receives respective sensing signals from the first and second sensing elements 120, 122 and outputs an indicator signal (e.g. a particular set of three signals to each LED respectively) that illuminates LEDs 124, 126, 128 to provide the visual indication. The logic circuit 106 includes a set of AND logic gates (or logical equivalent electrical components) to provide a desired visual indication based on received sensing signals. For example, input A corresponds to a logical sensing signal from sensing element 120 can provides a logical one or a logical zero depending on whether the sensing element 120 is engaged with coil 116 ("1") or unengaged ("0"). Similarly, input B corresponds to a logical sensing signal from sensing element 122. When both sensing elements 120, 122 are engaged to coil 116, the logic circuit 106 operates to illuminate LED 124. When sensing element 120 is released but sensing element 122 is engaged, the logic circuit 106 operates to illuminate LED 126. When both sensing elements are released (i.e. unengaged), the logic circuit 106 operates to illuminated LED 128. Though technically undefined (e.g. physically improbable) in the example shown in Fig. 3, the logic circuit 106 nonetheless gracefully indicates the undefined state should sensing element 122 be released before sensing element 120. In particular, the logic circuit 106 operates to turn off all LEDs.

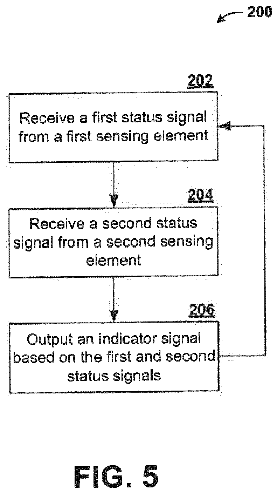

Turning now to Fig. 5, a methodology described in connection with the illustrated flow chart. The methodology described can be performed by a controller, a microprocessor, a FPGA, or logic circuit 106 to output an indicator signal based on sensing signals from various sensing elements. Fig. 5 illustrates a flow chart of a method 200 for providing an indication related to an amount of wire remaining in a container. At 202, a first status signal from a first sensing element is received. The first status signal, or sensing signal, is indicative of whether or not the first sensing element is engaged with (i.e. detects) a portion of a coil of wire within a container. At 204, a second status signal from a second sensing element is received. The second status signal, like the first status signal, indicates whether or not the second sensing signal is engaged with the coil of wire. It is to be appreciated that steps 202 and 204 can occur in parallel simultaneously. That is, both status signals can be received at the same time and reception of one signal need not occur before reception of the other signal. At 206, an indicator signal is output, wherein the indicator signal is based on the first and second status signals. The indicator signal may include a set of individual signals to a set of LEDs as described above in connection with Fig. 4.

As shown in Fig. 5, the method 200 can continuously loop so that the status signals are continuously received and the indicator signal, based thereon, is continuously output. In general, the status signals are continuously received so that changes are immediately identified. Those changes are immediately reflected in an updated indicator signal.

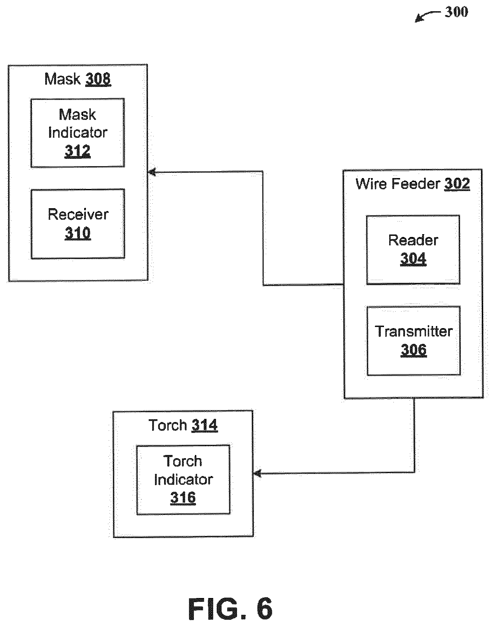

Turning now to Figs. 6-9, an integrated alert system 300 according to another embodiment is illustrated. System 300 may be utilized in a semi-automatic welding system where an operator utilizes a welding torch 314 and a wire feeder 302 that feeds welding wire automatically to the welding torch 314. As shown in Fig. 6, the system 300 can include a wire feeder 302 having a reader 304 and a transmitter 306. The reader 304 detects a marker placed on the welding wire as the welding wire is fed to the welding torch 314. When detected, the transmitter 306 sends a signal indicating that the marker was detected. In an aspect, the marker is placed on a spool of welding wire at a location nearing the end of the spool so as to mark an impending end of the wire.

System 300 includes a welding mask 308 configured to be worn by an operator. The mask 308 includes a receiver 310 to receive the signal from the transmitter 306 and a mask indicator 312 to provide a visual or graphical notification to the operator that the end of the wire is approaching. The mask indicator 312 can be an LED on the inside of the mask 308 or a graphical notification displayed on an head-up display integrated with mask lens. The transmitter 306 and receiver 308 may communicate in accordance with the Bluetooth protocol. However, it is to be appreciated that any wireless communication protocol may be utilized.

System 300 further includes a welding torch 314 having a torch indicator 316. The torch 314 receives a signal from the wire feeder 302. The signal can be wireless as with the welding mask 308. However, as the torch 314 and wire feeder 302 are physically coupled so as to feed the welding wire, a wired signal can be communicated from the wire feeder 302 to torch 314 when the reader 304 detects the marker. According to various aspects, the marker can be a chemical, a mechanical, or an optical marker.

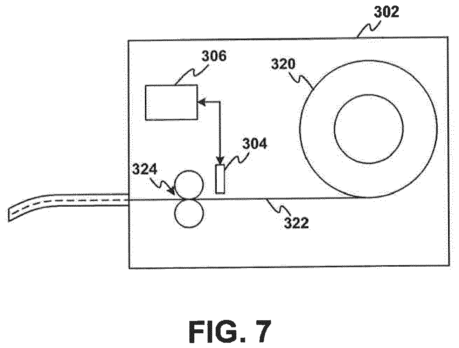

Turning to Fig. 7, an exemplary, non-limiting wire feeder 302 is illustrated. The wire feeder 302 includes the reader 304 and transmitter 306 described above. A spool 320 of welding wire 322 can be installed within wire feeder 302 and fed by drive rollers 324 to the torch 314. The reader 304 can be installed in proximity to the driver rollers 324, for example.

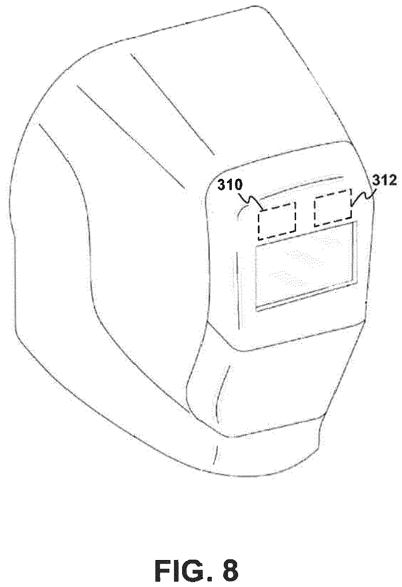

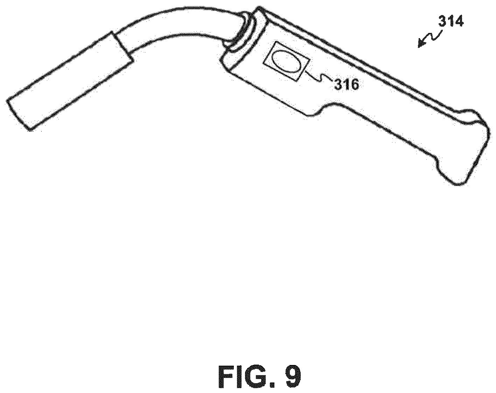

Fig. 8 illustrates an exemplary, non-limiting welding mask 308. Welding mask 308 is configured to be worn over the face of the operator. The receiver 310 and indicator 312 can be integrated within the mask 308, with the indicator 312 being positioned so as to visible to the operator during a welding operation. Fig. 9 illustrates an exemplary, non-limiting torch 314 having the torch indicator 316. The torch indicator 316 can be an ultraviolet light and provide an indicator that the end of the welding wire is imminent.

It is to be appreciated that the embodiments of Fig. 1-5 and Figs. 6-9 can be combined. For example, a transmitter can be included in the indicator system incorporated into package 100 so as to transmit a signal to a welding mask or welding torch to warn the operator of the impending end of the welding wire supply. In addition, the reader in the wire feeder can be included in the package 100 near a dispensation point to detect an imminent end of the wire.

In accordance with the foregoing, in one embodiment, a system is provided that includes at least two sensing elements mountable within a container for a coil of welding wire so as to engage the coil of welding wire at different locations. The system further includes an indicator configured to provide a visual indication of an amount of welding wire remaining. In addition, the system includes a circuit operatively coupled to the at least two sensing elements and the indicator. The circuit is configured to update the visual indication provided by the indicator in response to inputs indicative of respective statuses of the at least two sensing elements.

In various examples, the at least two sensing elements are non-contact inductive sensors. Further, the at least two sensing elements are configured to be vertically spaced within the container to engage the coil of welding wire at different heights. The at least two sensing elements respectively output a status signal indicative of whether a portion of the welding wire is in proximity to the respective sensing element. The circuit is further configured to update the visual indication provided by the indicator based on respective status signals from the at least two sensing elements. The visual indication corresponds to one of a set of states, each state corresponds to a set of statuses of the at least of sensing elements. The set of statuses includes a status where all sensing elements are engaged with the coil of welding wire, a status where at least one sensing element is engaged with the coil of welding wire, and a status where none of the sensing elements are engaged with the coil of welding wire.

In further examples, the indicator comprises a set of LEDs and illumination of one LED of the set corresponds to a particular output by the at least two sensing elements. The locations at which the at least two sensing elements engage respectively correspond to different threshold amounts of welding wire remaining. The visual indication provided by the indicator specifies whether or not a particular threshold amount is reached.

According to another aspect, a method is described. The method can include receiving a first status signal from a first sensing element mounted within the container, the first sensing element being configured to engage a coil of welding wire at a first location. The method can further include receiving a second status signal from a second sensing element mounted within the container, the second sensing element being configured to engage the coil of welding wire at a second location. In addition, the method can include outputting an indicator signal based on the first and second status signals. The method can further include displaying a visual indication on an indicator visible on an exterior of container in accordance with the indicator signal.

In one example, the first and second sensing elements are non-contact inductive sensors. The first and second sensing elements are vertically arranged within the container such that the first location and the second location are at different heights relative to the coil of welding wire. The first status signal and the second signal respectively indicate whether or not a portion of welding wire is in proximity to the first sensing element and the second sensing element. In further examples, the indicator includes at least a first LED, a second LED, and a third LED. In displaying the visual indication, the method can include illuminating the first LED when the first status signal and the second status signal both report proximity to the welding wire. The method can also include illuminating the second LED when only the second status signal reports proximity to the welding wire. Further, the method can include illuminating the third LED when neither the first status signal nor the second status signal report proximity to the welding wire.

In yet another aspect, a package for a coil of welding wire is described. The package includes a carton that houses the coil of welding wire. The package further includes a sensing element positioned within an interior of the carton and configured to output a sensing signal indicative of a state of engagement between the sensing element and a portion of the welding wire. In addition, the package includes a circuit configured to receive the sensing signal from the sensing element and output an indicator signal based on the sensing signal. The package further includes an indicator located on an exterior of the carton and configured to receive the indicator signal from the circuit and to display a visual indication, based on the indicator signal, representative of an amount of welding wire remaining in the package.

In an example, the circuit of the package updates the indicator signal in response to an updated sensing signal due to welding wire being dispensed from the package. In another example, the package includes a set of sensing elements and a set of LEDs. The set of LEDs includes one more than a number of sensing elements. Accordingly, a status of the amount of wire remaining is indicated by a number of LEDs illuminated, which corresponds to the number of sensing elements engaged with the coil of welding wire plus one. As such, a variable and customizable degree for the visual indication is achieved.

The above examples are merely illustrative of several possible embodiments of various aspects of the present invention, wherein equivalent alterations and/or modifications will occur to others skilled in the art upon reading and understanding this specification and the annexed drawings. In particular regard to the various functions performed by the above described components (assemblies, devices, systems, circuits, and the like), the terms (including a reference to a "means") used to describe such components are intended to correspond, unless otherwise indicated, to any component, such as hardware, software, or combinations thereof, which performs the specified function of the described component (e.g., that is functionally equivalent), even though not structurally equivalent to the disclosed structure which performs the function in the illustrated implementations of the invention. In addition although a particular feature of the invention may have been disclosed with respect to only one of several implementations, such feature may be combined with one or more other features of the other implementations as may be desired and advantageous for any given or particular application. Also, to the extent that the terms "including", "includes", "having", "has", "with", or variants thereof are used in the detailed description and/or in the claims, such terms are intended to be inclusive in a manner similar to the term "comprising."

This written description uses examples to disclose the invention, including the best mode, and also to enable one of ordinary skill in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that are not different from the literal language of the claims, or if they include equivalent structural elements with insubstantial differences from the literal language of the claims.

The best mode for carrying out the invention has been described for purposes of illustrating the best mode known to the applicant at the time. The examples are illustrative only and not meant to limit the invention, as measured by the scope and merit of the claims. The invention has been described with reference to preferred and alternate embodiments. Obviously, modifications and alterations will occur to others upon the reading and understanding of the specification. It is intended to include all such modifications and alterations insofar as they come within the scope of the appended claims or the equivalents thereof.

**REFERENCE NUMERALS**

| | | | |
|---|---|---|---|
| 100 | package | 202 | step |
| 102 | welding wire | 204 | step |
| 104 | sensing element | 206 | step |
| 106 | logic circle | 300 | system |
| 108 | indicator | 302 | wire feeder |
| 110 | LED | 304 | reader |
| 112 | lid | 306 | transmitter |
| 114 | carton | 308 | welding mask |
| 116 | coil | 310 | receiver |
| 118 | welding wire | 312 | mask indicator |
| 120 | sensing element | 314 | welding torch |
| 122 | sensing element | 316 | torch indicator |
| 124 | LED | 320 | spool |
| 126 | LED | 322 | welding wire |
| 128 | LED | 324 | drive rollers |
| 200 | method | | |

## Claims

1. A system, comprising a container for a coil of welding wire, **characterized by**:
at least two sensing elements (120, 122) mountable within the container for a coil (116) of welding wire (118) so as to engage the coil (116) of welding wire (118) at different locations;
an indicator (108) configured to provide a visual indication of an amount of welding wire (118) remaining; and
a circuit operatively coupled to the at least two sensing elements (120, 122) and the indicator (108), wherein the circuit is configured to update the visual indication provided by the indicator (108) in response to inputs indicative of respective statuses of the at least two sensing elements (120, 122).

2. The system of claim 1, wherein the at least two sensing elements (120, 122) are non-contact inductive sensors.

3. The system of claim 1 or 2, wherein the at least two sensing elements (120, 122) are configured to be vertically spaced within the container to engage the coil (116) of welding wire (118) at different heights.

4. The system of one of the claims 1 to 3, wherein the at least two sensing elements (120, 122) respectively output a status signal indicative of whether a portion of the welding wire (118) is in proximity to the respective sensing element (120, 122), wherein preferably: the circuit is further configured to update the visual indication provided by the indicator (108) based on respective status signals from the at least two sensing elements (120, 122).

5. The system of claim 4, wherein the visual indication corresponds to one of a set of states, each state corresponds to a set of statuses of the at least of sensing elements (120, 122).

6. The system of claim 5, wherein the set of statuses includes a status where all sensing elements (120, 122) are engaged with the coil (116) of welding wire (118), a status where at least one sensing element (120, 122) is engaged with the coil (116) of welding wire (118), and a status where none of the sensing elements (120, 122) are engaged with the coil (116) of welding wire (118).

7. The system of one of the claims 1 to 6, wherein the indicator comprises a set of LEDs (124, 126, 128) and illumination of one LED of the set corresponds to a particular output by the at least two sensing elements (120, 122).

8. The system of one of the claims 1 to 7, wherein the locations at which the at least two sensing elements (120, 122) engage respectively correspond to different threshold amounts of welding wire (118) remaining; and/or wherein the visual indication provided by the indicator (108) specifies whether or not a particular threshold amount is reached.

9. A method for indicating an amount of welding wire (118) in a container, comprising:
receiving (202) a first status signal from a first sensing element (120) mounted within the container, the first sensing element (120) being configured to engage a coil (116) of welding wire (118) at a first location;
receiving (204) a second status signal from a second sensing element (122) mounted within the container, the second sensing element (122) being configured to engage the coil (116) of welding wire (118) at a second location;
outputting (206) an indicator signal based on the first and second status signals; and
displaying a visual indication on an indicator (108) visible on an exterior of the container in accordance with the indicator signal.

10. The method of claim 9, wherein the first and second sensing elements (120, 122) are non-contact inductive sensors; and/or wherein the first and second sensing elements (120, 122) are vertically arranged within the container such that the first location and the second location are at different heights relative to the coil (116) of welding wire (118); and/or wherein the first status signal and the second signal respectively indicate whether or not a portion of welding wire (118) is in proximity to the first sensing element (120) and the second sensing element (122).

11. The method of claim 9 or 10, wherein the indicator (108) includes at least a first LED (124), a second LED (126), and a third LED (128).

12. The method of claim 11, wherein displaying the visual indication further comprises illuminating the first LED (124) when the first status signal and the second status signal both report proximity to the welding wire 8118).

13. The method of claim 11 or 12, wherein displaying the visual indication further comprises illuminating the second LED (126) when only the second status signal reports proximity to the welding wire (118).

14. The method of one of the claims 11 to 13, wherein displaying the visual indication further comprises illuminating the third LED (128) when neither the first status signal nor the second status signal report proximity to the welding wire (118).

15. A package (100) for a coil (116) of welding wire (118), comprising: a carton that houses the coil (116) of welding wire (118);
a sensing element (120) positioned within an interior of the carton and configured to output a sensing signal indicative of a state of engagement between the sensing element (120) and a portion of the welding wire (118);
a circuit configured to receive the sensing signal from the sensing element (120) and output an indicator signal based on the sensing signal; and
an indicator (108) located on an exterior of the carton and configured to receive the indicator signal from the circuit and to display a visual indication, based on the indicator signal, representative of an amount of welding wire (118) remaining in the package (100), wherein preferably: the circuit updates the indicator signal in response to an updated sensing signal due to welding wire being dispensed from the package.
